# EUROPÄISCHE PATENTSCHRIFT

(11) **EP 0 848 657 B1**
(45) Veröffentlichungstag und Bekanntmachung des Hinweises auf die Patenterteilung: **22.03.2000**
(21) Anmeldenummer: 96932438.3
(22) Anmeldetag: 14.08.1996
(51) Int. Cl.: B23K 20/00

(54) **ANORDNUNG ZUR FÜHRUNG VON DRÄHTEN**
WIRE-GUIDING DEVICE
DISPOSITIF DE GUIDAGE DE FILS METALLIQUES

(30) Priorität: 15.08.1995 DE 19529821; 18.01.1996 DE 19601599
(43) Veröffentlichungstag der Anmeldung: 24.06.1998
(73) Patentinhaber: Hesse & Knipps GmbH, 33100 Paderborn (DE)
(72) Erfinder: HESSE, Hans-Jürgen, D-33106 Paderborn (DE); WALTHER, Frank, D-53721 Siegburg (DE)
(74) Vertreter: Hudler, Frank, Dipl.-Ing.
(86) Internationale Anmeldenummer: DE9601515
(87) Internationale Veröffentlichungsnummer: WO9706916

(56) Entgegenhaltungen:
- EP-A- 0 390 036
- DE-A- 3 519 594
- US-A- 5 199 630

## Beschreibung

Die Erfindung betrifft eine Anordnung zur Führung von Drähten zwischen zwei mit begrenztem Drehwinkel relativ zueinander verdrehbaren Bauteilen, vorzugsweise von einer Vielzahl von Drähten eines Kabels.

Bei derartigen Anordnungen entstehen besondere Probleme bezüglich der Verlegung von Verbindungskabeln oder Drähten zwischen den relativ zueinander verdrehbaren Bauteilen. Solche Bauteile können beispielsweise eine Trägerbaugruppe und eine an dieser in einem Drehgelenk befestigte Aufnahme für eine Bearbeitungsvorrichtung sein, wie dies bei Drahtbondern mit drehbarem Bondkopf der Fall ist. Die Verlegung der Kabel oder Drähte muß in solchen Fällen so erfolgen, daß auch bei schnellen Schwenkbewegungen über größere Drehwinkel keine unzulässige Wechselbeanspruchung der einzelnen Litzen des Kabels oder der Drähte auftritt. Diese Wechselbeanspruchung, die jeweils an den Befestigungsstellen des Kabels am Träger und der Aufnahme in besonderem Maße auftritt, kann zum Drahtbruch führen, so daß die Funktion der Bearbeitungseinheit nicht mehr gewährleistet ist.

Um eine möglichst lange Funktionsfähigkeit der Kabelverbindung zu gewährleisten, wird die Verlegung der Kabel innerhalb von Führungen in der Drehachse, oder außerhalb dieser vorgenommen. In beiden Fällen müssen die Kabel jedoch möglichst lang ausgeführt werden, um entweder die Torsions- und/oder die Biegbeanspruchung des Kabels in Grenzen zu halten.

Bei Ultraschall-Drahtbondern mit drehbarem Bondkopf entstehen durch die hohen Drehgeschwindigkeiten und Drehwinkel auch über 360° besondere Probleme. Bei solchen Vorrichtungen enthält der Bondkopf einen Ultraschallschwinger mit einem zugehörigen Ultraschallübertrager und ein an diesem angeordnetes Bondwerkzeug (Bondkeil, bzw. Wedge), wobei das Verbindungskabel eine Vielzahl von Aufgaben, wie Energiezuführung, Übertragung von Meßwerten, usw., zu erfüllen hat. Wird das Kabel außerhalb der Drehachse vom Träger zur drehbaren Aufnahme mit dem Bondkopf geführt, so ist einerseits mit hohen Beschleunigungswerten des Kabels zu rechnen und andererseits führt die Verdrehung der Aufnahme dazu, daß das Kabel die in der Drehachse, oder innerhalb des Schwenkbereiches des Kabels befindlichen Bauteile umschlingt. Das bedeutet, daß die Länge des Kabels so bemessen sein muß, daß dieses beim Erreichen der jeweiligen Schwenkendlage nicht gereckt wird.

Bei Drahtbondern mit drehbarem Bondkopf besteht weiterhin das Problem, daß der äußerst dünne in einem Führungskanal geführte Bonddraht in der Drehachse des Bondkopfes zugeführt wird, so daß die Kabelführung die Drehachse nicht schneiden darf.

Im Hinblick auf möglichst gute dynamische Eigenschaften der Drahtbonder sollte die Kabelführung die Massenträgheit nicht, oder nur unwesentlich beeinflussen. Darüberhinaus muß die Kabelführung so gestaltet sein, daß die Spielzahl der Wechselbelastungen möglichst nicht begrenzt ist.

Üblich ist deshalb eine Kabelzuführung in der Weise, daß das Kabel sowohl an der drehbaren Aufnahme für den Bondkopf, als auch am feststehenden Träger fest eingespannt ist. Beim Schwenken der Aufnahme wird dabei das gesamte Kabel tordiert, wobei es sich gleichzeitig spiralförmig um den Achsmantel in der Rotationsachse legt. Dabei kommt es zu einer Relativbewegung zwischen den einzelnen Litzen oder Adern des Kabels und zu einer Verdrillung der Litzen oder Adern miteinander. Dabei entsteht ein Verschleiß der die Standzeit des Kabels deutlich reduziert.

Um diese Probleme zumindest teilweise zu umgehen, ist aus der DE 37 39 957 eine Kabelzuführung bekannt geworden, bei der ein Flachbandkabel verwendet wird, welches um den Umfang der Aufnahme für den Bondkopf gelegt und eine drehbar gelagerte Trommel umschlingt. Auf diese Weise wird erreicht, daß das Flachbandkabel bei jeder Drehung der Aufnahme hin- und hergespult wird. Die Trommel wird dabei durch ein mit der Aufnahme verbundenes Zugseil zum Auf- und Abwickeln des Kabels angetrieben. Diese sehr aufwendige Lösung reduziert die Dynamik der Bondeinheit erheblich.

Der Erfindung liegt deshalb die Aufgabe zugrunde, eine Anordnung zur Führung von Drähten zu schaffen, bei der die Nachteile des Standes der Technik vermieden werden und bei der insbesondere bei einem geringen Trägheitsmoment eine geringe Belastung der Litzen oder der Drähte des Kabels gewährleistet wird.

Diese Aufgabenstellung wird erfindungsgemäß dadurch gelöst, daß die Drähte auf jedem Bauteil in konzentrischer oder nahezu konzentrischer Anordnung zur Drehachse durch dieses hindurchgeführt und zumindest teilweise in axialer Richtung festgelegt sind, daß der Betrag der Drahtlänge der Drähte zwischen den Bauteilen größer ist, als der Abstand der Bauteile zueinander, daß sich die Drähte bezüglich der Drehachse jeweils gemeinsam nach außen oder innen bauchig wölben, und daß die Drähte jeweils bei Erreichen der jeweiligen Schwenkendlage eine rechts- oder linksgängige Wendel großer Steigung bilden.

Die besondere Anordnung der Drähte des Kabels um die Drehachse und deren Längenbemessung zwischen den Bauteilen führt dazu, daß die wechselnden Biegungen in den Einspannbereichen dann weit unter der zulässigen Wechsellastgrenze liegen, so daß eine lange Lebensdauer der Kabel erreicht wird. Werden die Drähte in unmittelbarer Nähe der Drehachse konzentrisch, oder nahezu konzentrisch zu dieser durch die Bauteile geführt, so ergibt sich ein besonders geringes Trägheitsmoment, bzw. nur eine unbedeutende Beeinflussung der dynamischen Eigenschaften des Drahtbonders. In der Schwenkmittenstellung bilden die einzelnen Drähte einen in etwa tonnenförmigen Käfig, der beim Verschwenken bis zur Schwenkendlage in eine Wendel großer Steigung übergeht.

Ein weiterer besonderer Vorteil der Erfindung ist noch darin zu sehen, daß der axiale Abstand zwischen den Bauteilen ohne Funktionsbeschränkung sehr gering gehalten werden kann. Darüber hinaus ist die Anzahl der Drähte des zwischen den Bauteilen zu führenden Kabels nicht begrenzt, so daß die erfindungsgemäße Anordnung auch bereits mit einem einzigen Draht ohne Einschränkungen funktionsfähig ist.

Die Länge der Drähte zwischen den Bauteilen ist zweckmäßig so bemessen, daß die Steigung der Wendel in den Schwenkendlagen möglichst groß ist, wodurch die geringst mögliche Wechsellastbeanspruchung gewährleistet wird.

In einer Variante der Erfindung sind die Bauteile jeweils mit Durchführungen für die Drähte versehen, deren Symmetrieachsen gegenüber der Drehachse in Richtung zur vorgesehenen Wölbung der Drähte geringfügig angestellt sind. Damit wird die Richtung der Wölbung, nach außen oder innen, vorgegeben und während der gesamten Lebensdauer des Kabels beibehalten.

Um die Biegebeanspruchung der Drähte weiter zu reduzieren, sind diese innerhalb der Durchführungen mit Verstärkungen umgeben, die sich von den Durchführungen aus in Richtung zu den jeweils gegenüberliegenden Durchführungen trichterförmig, beispielsweise hyperbelförmig erweitern.

In einer Ausgestaltung der Erfindung können die Drähte in den Durchführungen zusätzlich durch eine Vergußmasse fixiert werden, die vorzugsweise elastisch sein sollte. Diese Variante ist einfach zu realisieren und führt ebenfalls zu einer weiteren Reduzierung der Biegebeanspruchung in den Schwenkendlagen.

Eine andere Variante der Erfindung ist dadurch gekennzeichnet, daß die Drähte in den Durchführungen durch lösbare Rundschellen fixiert sind.

Eine besondere Ausgestaltung der Erfindung ist dadurch gekennzeichnet, daß das Anschlußkabel im Träger und in der Aufnahme jeweils über Steckverbindungen mit den Drähten verbunden ist. Damit läßt sich eine wesentliche Vereinfachung der Montage erreichen, wobei gleichzeitig eine eventuell erforderliche Reparatur erleichtert wird. Vorzugsweise erfolgt die Verbindung des Anschlußkabels mit den Drähten durch Koaxialstecker, die jeweils mit einer zentrischen Ausnehmung zum Hindurchführen der Durchführung für den Bonddraht versehen sind.

Sollen vieladrige oder geschirmte Kabel vom Träger zur Aufnahme geführt werden, so ist es zweckmäßig, diese einseitig zu fixieren und auf der anderen Seite im Träger bzw. der Aufnahme längs verschieblich, beispielsweise in einem Gleitlager, zu führen.

Durch die Erfindung ergeben sich gegenüber dem Stand der Technik erhebliche Vorteile, die darin zu sehen sind, daß die Standzeit erheblich verbessert wird, da sich die einzelnen Drähte während der Drehbewegung nicht mehr berühren. Das bedeutet, daß die erfindungsgemäße Anordnung weitgehend verschleißfrei arbeitet.

Die in unmittelbarer Nähe zur Drehachse erfolgende Durchführung der Drähte durch die Bauteile führt zu besonders guten dynamischen Eigenschaften, da der Einfluß der Drähte auf das Trägheitsmoment des Bondkopfes vernachlässigt werden kann.

Ein weiterer Vorteil der Erfindung ergibt sich daraus, daß die Anzahl der vom Träger zur Aufnahme zu führenden Drähte nur durch den zur Verfügung stehenden Bauraum begrenzt wird. Praktisch bedeutet dies aber, daß auch eine größere Anzahl von Drähten problemlos untergebracht werden kann. Damit erfüllt die Erfindung auch künftige Anforderungen, wenn eine noch größere Anzahl von Sensoren und Steuerelementen am Bondkopf angeordnet werden soll.

Die Erfindung soll nachfolgend an einem Ausführungsbeispiel näher erläutert werden. In den zugehörigen Zeichnungen zeigen:
- Fig. 1: eine schematische Schnittdarstellung eines drehbaren Bondkopfes; und
- Fig. 2: eine Draufsicht auf die Anordnung der Drähte des Kabels zwischen zwei relativ zueinander verdrehbaren Bauteilen.

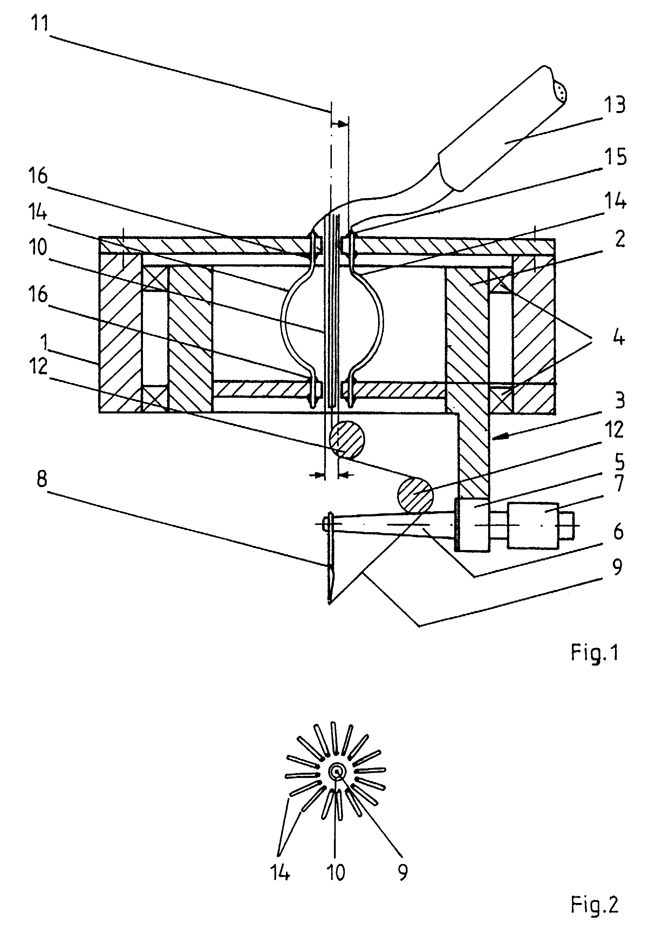

In Fig. 1 ist eine in einem Träger 1 drehbar angelenkte Aufnahme 2 für einen Bondkopf 3 dargestellt, wobei die Aufnahme 2 mit dem Träger 1 über ein Drehlager 4 verbunden ist. An diesem Bondkopf 3 ist in einer Halterung 5 an einem Ausleger der Aufnahme ein Schwingungsübertrager 6 (Transducer) vertikal verschwenkbar angelenkt. Dieser Schwingungsübertrager 6 enthält an einem Ende einen Ultraschall-Schwinger 7 und am anderen Ende ein Bondwerkzeug 8 zum Befestigen eines Bonddrahtes 9 auf Kontaktstellen.

Die Zuführung des Bonddrahtes 9 zum Bondwerkzeug 8 erfolgt über eine Drahtführung 10, die in der Drehachse 11 angeordnet ist, und sich durch den Träger 1 und durch die Aufnahme 2 erstreckt. Unterhalb der Aufnahme 2 sind Umlenkrollen 12 angeordnet, so daß der Bonddraht 9 schräg von der Seite zum Bondwerkzeug 8 zugeführt werden kann.

Für die Energiezuführung zum Ultraschall-Schwinger 7 und zur Übertragung von Steuerdaten und Meßwerten ist ein Anschlußkabel vorgesehen, das oberhalb des Trägers 1 in seine einzelnen Drähte 14 aufgesplittet ist. Sowohl im Träger 1 als auch in der Aufnahme 2 sind konzentrisch um die Drehachse 11 Durchführungen 15 zur Aufnahme und Hindurchleitung jeweils eines Drahtes 14 angeordnet. Der Abstand der Durchführungen 15 zur Drehachse 11 sollte möglichst gering gehalten werden.

Die einzelnen Drähte 14 sind jeweils in den Durchführungen 15 axial festgelegt, was beispielsweise durch eine elastische Vergußmasse 16 oder durch Kabeltüllen erfolgen kann. Die Verbindung der Drähte 14 mit Elementen des Bondkopfes 3 ist nicht dargestellt, da diese beliebig ausgeführt werden kann.

Wie aus den Zeichnungsfiguren zu ersehen ist, ist die Länge der Drähte 14 jeweils größer gewählt als der Abstand zwischen dem Träger 1 und der Aufnahme 2, so daß die Drähte 14 in der Mittelstellung zwischen den beiden Schwenkendlagen bauchig nach außen gewölbt sind.

Fig. 2 zeigt die Draufsicht auf die sternförmige Anordnung einer Vielzahl von Drähten 14, wobei die Durchführungen 15 durch den Träger 1 und die Aufnahme 2 auf einer zur Drehachse 11 koaxialen Kreisbahn nahe zur Drehachse 11 angeordnet sind. Die Anordnung der Durchführungen 15 kann auch annähernd koaxial zur Drehachse erfolgen. Die Durchführungen 15 im Träger 1 und in der Aufnahme 3 fluchten dabei miteinander. Es ist jedoch auch möglich, die Durchführungen 15 am Träger 1 und an der Aufnahme 2 auf unterschiedlichen Kreisbahnen anzuordnen.

Wie aus Fig. 1 ohne weiteres ersichtlich ist, kann die Erfindung auch bereits mit einem Draht 14 oder auch mit einer beliebigen Vielzahl von Drähten 14 ausgeführt werden. Die Anzahl der Drähte ist lediglich durch den Umfang der Kreisbahn bzw. der Ellipse begrenzt, auf der die Durchführungen 15 anzuordnen sind und durch den Durchmesser der durchzuführenden Drähte 14 selbst. Außerdem hat die Erfindung den besonderen Vorteil, daß die einander gegenüberliegenden Flächen des Trägers 1 und der Aufnahme 2 nicht notwendigerweise parallel zueinander ausgerichtet sein müssen.

Sollte im Einzelfall die Anzahl der anzuordnenden Drähte 14 einmal nicht ausreichen, so besteht prinzipiell die Möglichkeit, diese auf zwei Kreisbahnen um die Drehachse 11 anzuordnen, wobei lediglich darauf zu achten wäre, daß sich die Drähte 14 der einen Kreisbahn bei Erreichen des Schwenkwinkelendes mit den Drähten der anderen Kreisbahn nicht berühren, was durch die Festlegung eines entsprechenden Durchmesserunterschiedes zwischen den Kreisbahnen gewährleistet werden kann.

Der Radius der Kreisbahn, auf der die Durchführungen angeordnet sind, sollte so bemessen sein, daß die Steigung der in der Schwenkendlage gebildeten Wendel der Drähte 14 möglichst groß ist. Um jedoch ein möglichst niedriges Trägheitsmoment zu gewährleisten, bzw. um den Einfluß auf das Trägheitsmoment gering zu halten, sollte der Radius so gering wie möglich gewählt werden. Auf diese Weise wird einer übermäßigen Biegebeanspruchung der Drähte sicher vorgebeugt.

Um das vorgesehene Ausbauchen der Drähte 14 zu fördern, was an sich selbsttätig erfolgt, können die Durchführungen 15 für die Drähte 14 so angeordnet werden, daß deren Symmetrieachsen gegenüber der Drehachse 11 in Richtung zur vorgesehenen Wölbung der Drähte 14 geringfügig angestellt sind.

In der einfachsten Ausführungsform können die Durchführungen 15 als einfache Bohrungen ausgeführt sein, in denen die Drähte 14 durch eine Vergußmasse 16 oder durch Kabeltüllen festgelegt sind. Die Kabeltüllen können sich dabei in Richtung zur Mitte des Schwenklagers verjüngen, oder es können auch Kabeltüllen verwendet werden, die sich in Richtung zur Schwenklagermitte erweitern.

Selbstverständlich sind auch beliebige andere Mittel, wie Schellen oder kranzartige Aufnahmen, denkbar.

Obwohl die erfindungsgemäße Anordnung zur Führung von Drähten eine sehr große Lebensdauer aufweist, wird eine erhebliche Vereinfachung bei der Montage und beim Service erreicht, wenn die Anschlußkabel 13 jeweils am Träger 1 und an der Aufnahme 2 in Buchsen befestigt werden. Die elektrische Verbindung der Anschlußkabel 13 miteinander kann dann auf einfache Weise mittels Steckverbinder erfolgen, die miteinander durch die Drähte 14 verbunden sind. Als Stecker kommen hierbei Koaxialstecker mit einer koaxialen Mittelöffnung in Betracht, so daß die Durchführung 15 für den Bonddraht 9 axial durch den Stecker hindurchgeführt werden kann.

Der besondere Vorteil der Erfindung ist darin zu sehen, daß die einzelnen Drähte 14 nicht als kompaktes Kabel zusammengefaßt und am Träger 1 und an der Aufnahme 2 befestigt sind, sondern einzeln gehalten werden. Damit erfolgt beim Verdrehen des Bondkopfes 3 kein Verdrillen der Drähte miteinander, sondern nur ein Verbiegen und zusätzlich entsprechend dem Drehwinkel eine Torsion der Drähte um ihre Symmetrieachse. Die daraus resultierende Wechselbeanspruchung der einzelnen Drähte ist derart gering, daß ein nennenswerter Verschleiß nicht festzustellen ist.

Bei dem beschriebenen Ausführungsbeispiel wurde davon ausgegangen, daß das Anschlußkabel 13 zwischen den relativ zueinander verdrehbaren Bauteilen in einzelne Drähte 14 aufgesplittet werden kann. Sollen jedoch abgeschirmte Kabel, oder dgl. zum Bondkopf 3 geführt werden, so läßt sich dies jedoch nicht realisieren.

Würde ein derartiges Kabel auf die gleiche Art und Weise am Träger 1 und an der Aufnahme 2 wie die Drähte 14 festgelegt, so müßte mit einer erheblichen Wechselbeanspruchung und einer Verkürzung der Lebensdauer gerechnet werden.

Um auch bei solchen Kabeln die gleiche Lebensdauer zu erreichen, wie bei der Führung von einzelnen Drähten, wird das Kabel 13 nur einseitig festgelegt. Vorzugsweise wird das Anschlußkabel 13 dabei an der Aufnahme 2 fixiert und durch den Träger 1 in einer Gleitführung hindurchgeführt. Durch die Gleitführung kann sich das Kabel frei im Träger 1 bewegen, so daß eine erheblich vergrößerte Torsionslänge erreicht wird. Diese vergrößerte Torsionslänge führt gleichzeitig zu einer erheblich reduzierten mechanischen Belastung des Kabels. Da die Gleitführung die notwendige räumliche Fixierung des Kabels gewährleistet, ist es damit ohne weiteres möglich, geschirmte Kabel und gleichzeitig einzelne Drähte zwischen dem Träger 1 und der Aufnahme 2 zu führen.

In der Ausgangsposition, d.h. in der Mittelstellung zwischen den Schwenkendlagen, sind die einzelnen Drähte 14 bauchig nach außen gewölbt, wobei die Wölbung beim Schwenken des Bondkopfes 3 abnimmt und in der Schwenkendlage in eine Wendel übergeht. Die Länge der Drähte 14 zwischen dem Träger 1 und der Aufnahme 2 muß dabei so bemessen sein, daß die Drähte jeweils im Schwenkwinkelende mit Sicherheit nicht gereckt werden.

### Anordnung zur Führung von Drähten

### Bezugszeichenliste

- 1: Träger
- 2: Aufnahme
- 3: Bondkopf
- 4: Drehlager
- 5: Halterung
- 6: Schwingungsübertrager
- 7: Ultraschall-Schwinger
- 8: Bondwerkzeug
- 9: Bonddraht
- 10: Drahtführung
- 11: Drehachse
- 12: Umlenkrolle
- 13: Anschlußkabel
- 14: Draht
- 15: Durchführung
- 16: Vergußmasse

## Patentansprüche

1. Anordnung zur Führung von Drähten zwischen zwei mit begrenztem Drehwinkel relativ zueinander verdrehbaren Bauteilen, vorzugsweise von einer Vielzahl von Drähten eines Kabels, **dadurch gekennzeichnet**,
- daß die Drähte (14) auf jedem Bauteil in konzentrischer oder annähernd konzentrischer Anordnung zur Drehachse (11) durch dieses hindurchgeführt und zumindest teilweise in axialer Richtung festgelegt sind,
- daß der Betrag der Drahtlänge der Drähte (14) zwischen den Bauteilen größer ist, als der Abstand der Bauteile zueinander,
- daß sich die Drähte (14) bezüglich der Drehachse (11) jeweils gemeinsam nach außen oder innen bauchig wölben, und
- daß die Drähte (14) jeweils bei Erreichen der jeweiligen Schwenkendlage eine rechts- oder linksgängige Wendel großer Steigung bilden.

2. Anordnung nach den Ansprüchen 1 , **dadurch gekennzeichnet**, daß die Bauteile jeweils mit Durchführungen (15) für die Drähte (14) versehen sind, deren Symmetrieachsen gegenüber der Drehachse (11) in Richtung zur vorgesehenen Wölbung der Drähte (14) geringfügig angestellt sind.

3. Anordnung nach den Ansprüchen 1 und 2, **dadurch gekennzeichnet**, daß die Drähte (14) innerhalb der Durchführungen (15) mit Verstärkungen umgeben sind, die sich von den Durchführungen (15) aus zu den jeweils gegenüberliegenden Durchführungen (15) trichterförmig erweitern.

4. Anordnung nach den Ansprüchen 1 bis 3, **dadurch gekennzeichnet**, daß die Drähte (14) in den Durchführungen (15) durch eine Vergußmasse (16) fixiert sind.

5. Anordnung nach Anspruch 4, **dadurch gekennzeichnet**, daß die Vergußmasse (16) elastisch ist.

6. Anordnung nach den Ansprüchen 1 bis 3, **dadurch gekennzeichnet**, daß die Drähte (14) in den Durchführungen (15) durch lösbare Rundschellen fixiert sind.

7. Anordnung nach den Ansprüchen 1 bis 3, **dadurch gekennzeichnet**, daß das Anschlußkabel (13) im Träger (1) und in der Aufnahme (2) jeweils über Steckverbindungen mit den Drähten (14) verbunden ist.

8. Anordnung nach Anspruch 8, **dadurch gekennzeichnet**, daß die Verbindung des Anschlußkabels (13) mit den Drähten (14) durch Koaxialstecker erfolgt, die jeweils mit einer zentrischen Ausnehmung zum Hindurchführen der Durchführung (15) versehen sind.

9. Anordnung nach einem der Ansprüche 1 bis 8, **dadurch gekennzeichnet**, daß vieladrige oder geschirmte Kabel einseitig fixiert sind und auf der anderen Seite im Träger (1) bzw. der Aufnahme (2) längs verschieblich geführt ist.

10. Anordnung nach Anspruch 9, **dadurch gekennzeichnet**, daß das Kabel in einem Gleitlager geführt ist.

## Claims

1. Arrangement for guiding wires through two relatively closely rotating components with restricted swing angles, chiefly with several wires of a cable. This specifies that:
- the wires (14) arranged concentrically or almost concentrically to the spin axis (11) on each component are passed through this and are at least partially set in an axial direction
- the length of the wires (14) between the components is greater than the distance between the components
- the wires (14) should all be arced inwards or outwards along the spin axis (11)
- each of the wires (14) forms a clockwise or anticlockwise coil with a steep incline at the end of the swing area

2. Arrangement in accordance with Claim 1 which stipulates that the components all have ducts (15) for the wires (14) whose symmetric axes in comparison to the spin axis (11) are set slightly in the direction of the arc of the wires (14).

3. Arrangement in accordance with Claims 1 and 2 which stipulate that the wires (14) must be sheathed with reinforcements in the ducts (15). These reinforcements must taper outwards in a conical manner from the ducts (15) to the opposite ducts (15).

4. Arrangement in accordance with Claims 1-3 which stipulate that the wires (14) are fixed in the ducts by means of a sealing compound (16).

5. Arrangement in accordance with Claim 4 whereby the sealing compound must be elastic.

6. Arrangement in accordance with Claims 1-3 which stipulate that the wires (14) are fixed in the duct (15) by means of detachable snap rivets.

7. Arrangement in accordance with Claims 1-3 which stipulate that the connection cable (13) be joined to the wires (14) by means jumpers in the support (1) and retainer (2).

8. Arrangement in accordance with Claim 8 whereby the connection between the cable (13) and the wires (14) is achieved by means of coaxial plugs which have a centric recess for guiding the duct (15).

9. Arrangement in accordance with one of Claims 1-8 whereby the multiwire cable or shielded cable is fixed on one side and on the other side it is fed through the support (1) and the retainer (2).

10. Arrangement in accordance with Claim 9 whereby the cable is fed through a plain bearing.

## Revendications

1. Disposition pour la conduite de fils entre deux pièces qu'il est pratiquement possible de tordre l'une vers l'autre par un angle d'orientation délimité, de préférence d'un certain nombre de fils d'un câble, caractérisée par le fait
- que les fils (14) de chaque pièce sont introduits dans ce câble selon une disposition concentrique ou presque concentrique par rapport à l'axe de rotation (11) et sont disposés au moins en partie en direction axiale,
- que la longueur des fils (14) entre les pièces est plus grande que la distance des pièces entre elles,
- que les fils (14) de l'axe de rotation (11) se voûtent de façon bombée chaque fois ensemble vers l'extérieur ou l'intérieur, et
- que les fils (14) forment, en atteignant la position finale d'orientation correspondante, une hélice accusant une grande pente tournant à droite ou à gauche.

2. Disposition d'après les spécifications dont question au point 1, caractérisée par le fait que les pièces sont chaque fois pourvues de passages traversants (15) pour les fils (14), dont les axes symétriques vis-à-vis de l'axe de rotation (11) sont légèrement disposés en direction de la courbure prévue des fils (14).

3. Disposition d'après les spécifications 1 et 2, caractérisée par le fait que les fils (14) sont entourés à l'intérieur des passages traversants (15) de renforcements, qui s'élargissent en entonnoir à partir des passages traversants (15) vers les passages traversants (15) respectifs situés à l'opposé.

4. Disposition d'après les spécifications 1 à 3, caractérisée par le fait que les fils (14) sont fixés dans les passages traversants (15) par une masse de scellement (16).

5. Disposition d'après la spécification 4, caractérisée par le fait que la masse de scellement (16) est élastique.

6. Disposition d'après les spécifications 1 à 3, caractérisée par le fait que les fils (14) sont fixés dans les passages traversants (15) par des brides de fixation circulaires détachables.

7. Disposition d'après les spécifications 1 à 3, caractérisée par le fait que le câble de raccordement (13) est relié aux fils (14) dans le support (1) et dans le logement (2) chaque fois via des cavaliers.

8. Disposition d'après la spécification 8, caractérisée par le fait que la connexion du câble de raccordement (13) aux fils (14) s'effectue via des fiches coaxiales, qui sont dotées chaque fois d'un creux central pour la conduite à travers le passage traversant (15).

9. Disposition d'après les spécifications 1 à 8, caractérisée par le fait que les câbles multifilaires ou protégés sont fixés d'un côté et sont glissés de l'autre côté tout le long du support (1) ou du logement (2).

10. Disposition d'après la spécification 9, caractérisée par le fait que le câble est conduit dans un palier à glissement.
